# FASCICULE DE BREVET EUROPEEN

(11) **EP 4 465 501 B1**
(45) Date de publication et mention de la délivrance du brevet: **19.08.2026**
(21) Numéro de dépôt: 24175925.7
(22) Date de dépôt: 15.05.2024
(51) Int. Cl.: H02K 9/06, H02K 5/15, H02K 5/20, H02K 1/20, H02K 1/32

(54) **MOTEUR OU ALTERNATEUR FERMÉ AUTO-VENTILÉ À ÉVACUATION AMÉLIORÉE ET VÉHICULE ASSOCIÉ**
SELBSTENTLÜFTENDER GESCHLOSSENER MOTOR ODER WECHSELSTROMGENERATOR MIT VERBESSERTER ENTLEERUNG UND FAHRZEUG DAFÜR
SELF-VENTILATED CLOSED MOTOR OR ALTERNATOR WITH IMPROVED EVACUATION AND ASSOCIATED VEHICLE

(30) Priorité: 16.05.2023 FR 2304826
(43) Date de publication de la demande: 20.11.2024
(73) Titulaire: ALSTOM Holdings, 93400 Saint-Ouen-sur-Seine (FR)
(72) Inventeur: ROBBE, Gilles, 25660 Montfaucon (FR); RANDRIA, Andry-Mamy, 25000 Besançon (FR)
(74) Mandataire: Plasseraud IP

(56) Documents cités:
- EP-A1- 1 050 949
- CN-A- 103 166 363
- CN-U- 208 209 734
- US-A1- 2008 303 360
- US-B2- 7 462 964
- US-B2- 7 770 660

## Description

La présente invention concerne un moteur ou alternateur fermé auto-ventilé selon la revendication 1.

L'invention concerne en outre un véhicule associé.

Le ventilateur, entraîné par l'arbre, permet notamment de ventiler le stator.

Le premier flasque comprend généralement une paroi interne entre le ventilateur et le rotor, de sorte que l'air à l'intérieur du moteur est essentiellement brassé sans contact thermique.

Un tel brassage n'est pas très efficace pour la gestion de la température de l'air à l'intérieur du moteur, qui est susceptible d'augmenter de manière significative, lorsque le moteur est utilisé.

Le document de brevet EP 1 050 949 A1 décrit un moteur ouvert que l'on peut refroidir d'une manière plus efficace tout en empêchant la détérioration de ses caractéristiques. Le document de brevet CN103166363A décrit un Système composite de refroidissement par air d'un moteur de traction entièrement étanche. Le document de brevet US7462964B2 présente un Moteur à refroidissement par ventilateur entièrement fermé.

Un but de l'invention est donc de proposer un moteur ou alternateur fermé auto-ventilé avec une ventilation efficace et un bon échange thermique.

A cet effet, l'invention a pour objet un moteur ou alternateur du type précité, dans lequel le premier flasque comprend une paroi interne entre le ventilateur et le rotor, ladite paroi interne présentant des orifices traversants de sorte que le ventilateur communique fluidiquement avec le rotor.

La communication fluidique, par la paroi ajourée, entre le rotor et le ventilateur, permet d'augmenter l'évacuation de la chaleur, le ventilateur agissant comme un échangeur thermique.

Selon d'autres caractéristiques avantageuses mais facultatives de l'invention, prises isolément ou selon toute combinaison techniquement possible :
- le premier flasque comprend une paroi interne et une paroi extérieure, la paroi extérieure délimitant la paroi extérieure du moteur au niveau du premier flasque, le ventilateur étant agencé entre la paroi extérieure et la paroi interne, la paroi extérieure comprenant au moins une ouverture ;
- l'au moins une ouverture comprend au moins une ouverture centrale agencée en regard du ventilateur selon la direction principale ;
- le premier flasque comprend une paroi interne entre le ventilateur et le rotor, ladite paroi interne présentant des orifices traversants de sorte que le ventilateur communique fluidiquement avec le rotor, les orifices traversants représentant entre 30 % et 40 % de la surface de la paroi interne ;
- le ventilateur présente une face interne et une face externe, le ventilateur générant un premier flux au niveau de la face externe et un deuxième flux au niveau de la face interne, le premier flux étant orienté vers les canaux de refroidissement du stator, le deuxième flux étant orienté vers les canaux de refroidissement du rotor ;
- le moteur ou alternateur comprend un brasseur d'air solidaire de l'arbre et agencé d'un deuxième côté du rotor selon la direction principale, le deuxième côté du rotor étant opposé au premier côté du rotor selon la direction principale ; et/ou
- le ventilateur comprend des nervures.

L'invention concerne en outre un véhicule comprenant un moteur de traction ou un alternateur, le moteur de traction ou l'alternateur étant un moteur ou un alternateur tel que défini précédemment.

L'invention sera bien comprise et ses avantages apparaitront davantage à la lumière de la description qui va suivre, donnée uniquement à titre d'exemple non limitatif et faite en référence aux dessins annexés, dans lesquels :

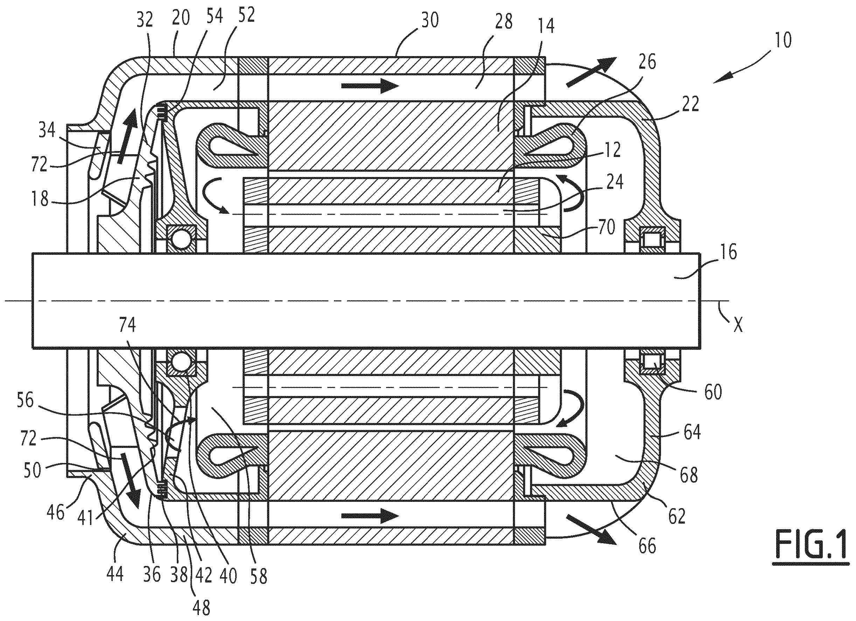

[Fig 1] la figure 1 est une vue en coupe d'un exemple de moteur selon l'invention.
Un exemple de moteur 10 selon l'invention est représenté sur la figure 1.

Le moteur est, par exemple, un moteur à induction.

Le moteur 10 est un moteur fermé auto-ventilé.

Le moteur 10 est, par exemple, un moteur de traction pour la propulsion d'un véhicule.

Le moteur 10 comprend un rotor 12, un stator 14, un arbre 16, un ventilateur 18, et un premier flasque 20.

Le moteur comprend en outre ici un deuxième flasque 22.

Le rotor 12 est adapté pour entrer en rotation autour d'un axe principal X s'étendant selon une direction principale.

Le rotor 12 définit des canaux de refroidissement de rotor 24.

Chaque canal de refroidissement de rotor 24 traverse le rotor 12, ici selon la direction principale.

Les canaux de refroidissement de rotor 24 sont répartis, ici à intervalle régulier, sur un cercle centré sur l'axe principal X.

Le stator 14 entoure radialement le rotor 12.

Le stator 14 comprend des bobinages 26.

Le stator 14 définit des canaux de refroidissement de stator 28.

Chaque canal de refroidissement de stator 28 traverse le stator 14, ici selon la direction principale.

Les canaux de refroidissement de stator 28 sont répartis sur un cercle centré sur l'axe principal X.

Dans l'exemple représenté, les canaux de refroidissement de stator 28 sont, par exemple, répartis sur le cercle à intervalle régulier.

Le stator 14 présente une surface externe 30.

La surface externe 30 définit une surface externe du moteur 10, ici dans une portion centrale du moteur entre le premier flasque 20 et le deuxième flasque 22.

La surface externe 30 est, par exemple, cylindrique.

L'arbre 16 est entraîné par le rotor 12 autour de l'axe principal X.

L'arbre 16 s'étend selon l'axe principal X.

Le ventilateur 18 est solidaire de l'arbre 16.

Le ventilateur 18 est donc adapté pour entrer en rotation avec l'arbre 16, et donc avec le rotor 12.

Le ventilateur 18 est agencé d'un premier côté du rotor 12 selon la direction principale.

Le ventilateur 18 comprend une paroi centrale 32.

Le ventilateur 18 présente une face interne et une face externe.

La face interne est la face de la paroi centrale 32 orientée vers le rotor 12.

La face externe est la face de la paroi centrale 32 opposée à la face interne.

Le ventilateur 18 comprend des éléments de ventilation 34.

Les éléments de ventilation 34 comprennent, par exemple, une deuxième paroi, ici annulaire, reliée à la paroi centrale 32.

Alternativement, les éléments de ventilation sont, par exemple, des pales ou des ailettes.

La paroi centrale 32 est, par exemple, agencée entre les éléments de ventilation 34 et le rotor 12 selon la direction principale.

La paroi centrale 32 présente un bord libre 36.

Le bord libre 36 s'étend ici sur tout une circonférence.

Le bord libre 36 présente ici une symétrie de rotation autour de l'axe principal X.

Le bord libre 36 est la partie de la paroi centrale 32 la plus éloignée de l'arbre 16.

Le bord libre 36 est ici pourvu d'une forme géométrique comprenant au moins un changement de direction.

Le bord libre 36 est, par exemple, pourvu de créneaux 38, comme représenté, ou d'un épaulement.

La paroi centrale 32 est une paroi pleine.

La paroi centrale 32 est dépourvue d'orifices traversants.

Dans un mode de réalisation, le ventilateur 18, ici la paroi centrale 32, comprend des nervures 41, plus particulièrement sur la face interne.

Les nervures 41 présentent, par exemple, une forme annulaire autour de l'axe principal X.

Alternativement, les nervures 41 présentent, par exemple, une forme hélicoïdale.

Les nervures 41 facilitent les échanges thermiques.

Le premier flasque 20 est agencé du premier côté du rotor 12 selon la direction principale.

Le premier flasque 20 comprend une paroi interne 42.

Le premier flasque 20 comprend en outre une paroi extérieure 44.

La paroi interne 42 et la paroi extérieure 44 sont reliées entre elles.

Le premier flasque 20, ici plus particulièrement la paroi interne 42, est relié à l'arbre 16 par un premier roulement 40.

Sur l'exemple représenté, le premier roulement 40 est agencé sur l'arbre 16 entre le ventilateur 18 et le rotor 12 selon la direction principale.

Alternativement, dans un mode de réalisation non représenté, la paroi extérieure 44 du premier flasque 20 est reliée à l'arbre 16 par le premier roulement. Le premier roulement est alors agencé du côté du ventilateur 18 à l'opposé du rotor 12.

Le ventilateur 18 est agencé entre la paroi extérieure 44 et la paroi interne 42.

Le ventilateur 18 est agencé au sein du premier flasque 20.

Le premier flasque 20 n'est pas entraîné en rotation par le rotor 12, et est fixe par rapport au stator 14.

La paroi extérieure 44 délimite la paroi extérieure du moteur 10 au niveau du premier flasque 20.

La paroi extérieure 44 comprend une face 46 et une portion de liaison 48, la portion de liaison 48 reliant la face 46 au stator 14, plus particulièrement à la surface externe 30.

La face 46 forme une première extrémité du moteur 10 le long de la direction principale.

La face 46 présente au moins une ouverture 50 traversant la face 46.

L'au moins une ouverture 50 comprend au moins une ouverture centrale agencée en regard du ventilateur 18 selon la direction principale.

La paroi interne 42 est agencée entre le ventilateur 18 et le rotor 12 selon la direction principale.

La paroi interne 42 relie le premier roulement 40 au stator 14, plus particulièrement à une distance selon la direction radiale inférieure à la distance des canaux de refroidissement du stator 28.

Le premier flasque 20 définit des ouvertures 52 reliant la face 46 aux canaux de refroidissement du stator 28.

Les ouvertures 52 sont définies entre la paroi interne 42 et la paroi extérieure 44.

En dehors des ouvertures 52, la paroi interne 42 et la paroi extérieure 44 sont reliées entre elles, de sorte à former une unique paroi.

La paroi interne 42 présente localement une forme complémentaire 54 du bord libre 36.

La forme complémentaire 54 comprend, par exemple, des créneaux.

Plus particulièrement, la paroi interne 42 s'étend, ici dans une portion intermédiaire, à une distance minimale du bord libre 36.

La forme complémentaire 54 s'étend au niveau de la portion intermédiaire, en regard du bord libre 36.

Le bord libre 36 est séparé sur toute sa circonférence du premier flasque 20, ici de la paroi interne 42, par un système de chicanes, formé ici par la forme complémentaire 54 et la forme du bord libre 36.

La paroi interne 42, plus particulièrement la portion intermédiaire, est séparée du bord libre 36 de la paroi centrale 32 du ventilateur uniquement par un jeu, compris entre 0,1 mm et 1 mm.

La paroi interne 42 présente des orifices traversants 56.

Les orifices traversants 56 s'étendent en regard du ventilateur 18, plus particulièrement de la paroi centrale 32.

Le ventilateur 18 communique alors fluidiquement avec le rotor 12, par l'intermédiaire des orifices traversants 56.

Les orifices traversants 56 représentent entre 30 % et 40 % de la surface de la paroi interne 42.

Le premier flasque 20 délimite un espace interne 58 reliant entre eux les canaux de refroidissement de rotor 24.

Le deuxième flasque 22 est agencé du deuxième côté du rotor selon la direction principale, le deuxième côté du rotor étant agencé à l'opposé du premier côté.

Plus particulièrement, ici, le deuxième flasque 22 est relié à l'arbre 16 par un deuxième roulement 60.

Le deuxième flasque 22 n'est pas entraîné en rotation par le rotor 12, et est fixe par rapport au stator 14.

Le deuxième flasque 22 comprend, ici est constitué de, une paroi extérieure 62.

La paroi extérieure 62 délimite la paroi extérieure du moteur 10 au niveau du deuxième flasque 22.

La paroi extérieure 62 comprend une face 64 et une portion de liaison 66 reliant la face 64 au stator 14.

La face 64 forme une deuxième extrémité du moteur 10 le long de la direction principale, à l'opposé de la face 46.

Le deuxième flasque 22, ici la paroi extérieure 62, définit un espace interne 68.

Le deuxième flasque 22 présente une forme telle qu'il ne s'étend pas en regard des canaux de refroidissement de stator 28.

Chaque canal de refroidissement de stator 28 débouche directement à l'extérieur du moteur 10.

Le deuxième flasque 22 forme un couvercle du moteur 10 fermant l'ensemble du moteur du deuxième côté, à l'exception des canaux de refroidissement de stator 28, ici par exemple de manière hermétique.

Au niveau de chaque canal de refroidissement de stator 28, la paroi extérieure 62, plus particulièrement la portion de liaison 66, est fixée au stator 14 à un emplacement entre ledit canal de refroidissement de stator 28 exclus et le rotor 12 selon la direction axiale par rapport à l'axe principal X. Ici, la paroi extérieure 62, plus particulièrement la portion de liaison 66, est fixée au stator 14 à un épaulement formant un bord dudit canal de refroidissement de stator 28, ledit bord étant le bord du canal le plus proche de l'axe principal X.

Le système de chicanes et l'épaulement permettent de maintenir une étanchéité satisfaisante de l'espace fermé.

Dans l'exemple représenté, le moteur 10 comprend en outre un brasseur d'air 70 solidaire de l'arbre 16 et agencé d'un deuxième côté du rotor 12 selon la direction principale, le deuxième côté du rotor étant opposé au premier côté du rotor selon la direction principale.

L'espace entre la paroi centrale 32 du ventilateur 18 et la paroi interne 42, l'espace interne 58 délimité par le premier flasque, le rotor 12, le stator 14 et l'espace interne 68 délimité par le deuxième flasque 22 forme ici un espace fermé, à l'exception du système de chicanes.

Le brasseur d'air 70 favorise la circulation d'air dans l'espace interne 68.

Le ventilateur 18 génère un premier flux 72 au niveau de la face externe et un deuxième flux 74 au niveau de la face interne, le premier flux 72 étant orienté vers les canaux de refroidissement du stator 28, le deuxième flux étant orienté vers le rotor 12, et notamment les canaux de refroidissement du rotor 24
Le premier flasque 20 et le deuxième flasque 22 sont tels que le premier flux 72 est orienté vers les canaux de refroidissement de stator 28 puis l'extérieur du moteur 10 et que le deuxième flux 74 est orienté vers les canaux de refroidissement de rotor 24 en circulation interne.

Le ventilateur 18 est la seule barrière entre l'air extérieur et l'enceinte du moteur 10 comprenant le rotor 12, de sorte que le deuxième flux 74 permet un échange thermique efficace au niveau du ventilateur 18.

Un tel moteur 10 permet donc une ventilation interne et externe efficace, avec un bon échange thermique.

L'enseignement de l'invention s'applique, en outre, également à un alternateur, à la place d'un moteur.

## Revendications

1. Moteur (10) ou alternateur fermé auto-ventilé comprenant :
- un stator (14) définissant des canaux de refroidissement de stator (28),
- un rotor (12) définissant des canaux de refroidissement de rotor (24),
- un arbre (16) entraîné par le rotor (12) autour d'un axe principal (X) s'étendant selon une direction principale,
- un ventilateur (18) solidaire de l'arbre (16) et agencé d'un premier côté du rotor (12) selon la direction principale, et
- un premier flasque (20) agencé du premier côté du rotor (12) selon la direction principale,
le premier flasque (20) comprenant une paroi interne (42) entre le ventilateur (18) et le rotor (12), ladite paroi interne (42) présentant des orifices traversants (56) de sorte que le ventilateur (18) communique fluidiquement avec le rotor (12),
dans lequel le ventilateur (18) présente un bord libre (36), le bord libre (36) étant séparé sur toute sa circonférence du premier flasque (20) par un système de chicanes (38, 54), le système de chicanes (38, 54) séparant le bord libre (36) de la paroi interne (42) du premier flasque (20), le bord libre (36) étant séparé sur toute sa circonférence de la paroi interne (42), la paroi interne (42) présentant localement une forme complémentaire (54) du bord libre (36), le système de chicanes étant formé par ladite forme complémentaire (54) et le bord libre (36), et dans lequel le stator et le rotor sont disposés dans un espace fermé, à l'exception du système de chicanes.

2. Moteur ou alternateur selon la revendication 1, dans lequel le premier flasque (20) comprend une paroi interne (42) et une paroi extérieure (44), la paroi extérieure (44) délimitant la paroi extérieure du moteur (10) au niveau du premier flasque (20), le ventilateur (18) étant agencé entre la paroi extérieure (44) et la paroi interne (42), la paroi extérieure (44) comprenant au moins une ouverture (50).

3. Moteur ou alternateur selon la revendication 2, dans lequel l'au moins une ouverture (50) comprend au moins une ouverture centrale agencée en regard du ventilateur (18) selon la direction principale.

4. Moteur ou alternateur selon l'une quelconque des revendications 1 à 3, dans lequel le premier flasque (20) comprend une paroi interne (42) entre le ventilateur (18) et le rotor (12), ladite paroi interne (42) présentant des orifices traversants (56) de sorte que le ventilateur (18) communique fluidiquement avec le rotor (12), les orifices traversants (56) représentant entre 30 % et 40 % de la surface de la paroi interne (42).

5. Moteur ou alternateur selon l'une quelconque des revendications 1 à 4, dans lequel le ventilateur (18) présente une face interne et une face externe, le ventilateur (18) générant un premier flux (72) au niveau de la face externe et un deuxième flux (74) au niveau de la face interne, le premier flux (72) étant orienté vers les canaux de refroidissement du stator (28), le deuxième flux (74) étant orienté vers les canaux de refroidissement du rotor (24).

6. Moteur ou alternateur selon l'une quelconque des revendications 1 à 5, comprenant un brasseur d'air (70) solidaire de l'arbre (16) et agencé d'un deuxième côté du rotor (12) selon la direction principale, le deuxième côté du rotor (12) étant opposé au premier côté du rotor (12) selon la direction principale.

7. Moteur ou alternateur selon l'une quelconque des revendications 1 à 6, dans lequel le ventilateur (18) comprend des nervures (41).

8. Véhicule comprenant un moteur de traction ou un alternateur, le moteur de traction ou l'alternateur étant un moteur (10) ou un alternateur selon l'une quelconque des revendications 1 à 7.

## Patentansprüche

1. Geschlossener, selbstlüftender Motor (10) oder Wechselstromgenerator, umfassend:
- einen Stator (14), der Stator-Kühlkanäle (28) bildet,
- einen Rotor (12), der Rotor-Kühlkanäle (24) bildet,
- eine Welle (16), die von dem Rotor (12) um eine Hauptachse (X) angetrieben wird, die sich in einer Hauptrichtung erstreckt,
- einen Lüfter (18), der fest mit der Welle (16) verbunden ist und auf einer ersten Seite des Rotors (12) in der Hauptrichtung angeordnet ist, und
- einen ersten Flansch (20), der auf der ersten Seite des Rotors (12) in der Hauptrichtung angeordnet ist,
wobei der erste Flansch (20) eine Innenwand (42) zwischen dem Lüfter (18) und dem Rotor (12) umfasst, wobei die Innenwand (42) Durchgangsöffnungen (56) aufweist, sodass der Lüfter (18) strömungstechnisch mit dem Rotor (12) in Verbindung steht,
wobei der Lüfter (18) eine freie Kante (36) aufweist, wobei die freie Kante (36) über ihren gesamten Umfang durch ein Leitblattsystem (38, 54) vom ersten Flansch (20) getrennt ist, wobei das Leitblattsystem (38, 54) die freie Kante (36) von der Innenwand (42) des ersten Flansches (20) trennt, wobei die freie Kante (36) über ihren gesamten Umfang von der Innenwand (42) getrennt ist, wobei die Innenwand (42) örtlich eine zu der freien Kante (36) komplementäre Form (54) aufweist, wobei das Leitblattsystem durch die komplementäre Form (54) und die freie Kante (36) gebildet ist, und wobei der Stator und der Rotor in einem geschlossenen Raum angeordnet sind, mit Ausnahme des Leitblattsystems.

2. Motor oder Wechselstromgenerator nach Anspruch 1, wobei der erste Flansch (20) eine Innenwand (42) und eine Außenwand (44) umfasst, wobei die Außenwand (44) die Außenwand des Motors (10) im Bereich des ersten Flansches (20) begrenzt, wobei der Lüfter (18) zwischen der Außenwand (44) und der Innenwand (42) angeordnet ist und die Außenwand (44) wenigstens eine Öffnung (50) umfasst.

3. Motor oder Wechselstromgenerator nach Anspruch 2, wobei die wenigstens eine Öffnung (50) wenigstens eine zentrale Öffnung umfasst, die gegenüber dem Lüfter (18) in Hauptrichtung angeordnet ist.

4. Motor oder Wechselstromgenerator nach einem der Ansprüche 1 bis 3, wobei der erste Flansch (20) eine Innenwand (42) zwischen dem Lüfter (18) und dem Rotor (12) umfasst, wobei die Innenwand (42) Durchgangsöffnungen (56) aufweist, sodass der Lüfter (18) strömungstechnisch mit dem Rotor (12) in Verbindung steht, wobei die Durchgangsöffnungen (56) zwischen 30 % und 40 % der Fläche der Innenwand (42) ausmachen.

5. Motor oder Wechselstromgenerator nach einem der Ansprüche 1 bis 4, wobei der Lüfter (18) eine Innenseite und eine Außenseite aufweist, wobei der Lüfter (18) an der Außenseite einen ersten Luftstrom (72) und an der Innenseite einen zweiten Luftstrom (74) erzeugt, wobei der erste Luftstrom (72) auf die Kühlkanäle des Stators (28) gerichtet ist und der zweite Luftstrom (74) auf die Kühlkanäle des Rotors (24) gerichtet ist.

6. Motor oder Wechselstromgenerator nach einem der Ansprüche 1 bis 5, welcher ein Gebläse (70) umfasst, das fest mit der Welle (16) verbunden ist und auf einer zweiten Seite des Rotors (12) in der Hauptrichtung angeordnet ist, wobei die zweite Seite des Rotors (12) der ersten Seite des Rotors (12) in der Hauptrichtung gegenüberliegt.

7. Motor oder Wechselstromgenerator nach einem der Ansprüche 1 bis 6, wobei der Lüfter (18) Rippen (41) umfasst.

8. Fahrzeug, umfassend einen Antriebsmotor oder einen Wechselstromgenerator, wobei der Antriebsmotor oder der Wechselstromgenerator ein Motor (10) oder ein Wechselstromgenerator nach einem der Ansprüche 1 bis 7 ist.

## Claims

1. A closed self-ventilating motor (10) or alternator comprising:
- a stator (14) defining stator cooling channels (28),
- a rotor (12) defining rotor cooling channels (24),
- a shaft (16) driven by the rotor about a main axis (X) extending in a main direction,
- a fan (18) integral to the shaft (16) and arranged on a first side of the rotor (12) along the main direction, and
- a first flange (20) arranged on the first side of the rotor (12) along the main direction,
the first flange (20) comprising an inner wall (42) between the fan (18) and the rotor (12), the inner wall (42) having through-holes (56) such that the fan (18) is in fluid communication with the rotor (12),
wherein the fan (18) has a free edge (36), the free edge (36) being separated along its entire circumference from the first flange (20) by a baffle system (38, 54), the baffle system (38, 54) separating the free edge (36) from the inner wall (42) of the first flange (20), the free edge (36) being separated along its entire circumference from the inner wall (42), the inner wall (42) locally having a complementary shape (54) to the free edge (36), the baffle system being formed by the complementary shape (54) and the free edge (36),
and wherein the stator and the rotor are arranged in a closed space, with the exception of the baffle system.

2. Motor or alternator according to claim 1, wherein the first flange (20) comprises an inner wall (42) and an exterior wall (44), the exterior wall (44) defining the exterior wall of the motor (10) at the first flange (20), the fan (18) being arranged between the exterior wall (44) and the inner wall (42), the exterior wall (44) comprising at least one opening (50).

3. Motor or alternator according to claim 2, wherein the at least one opening (50) comprises at least one central opening arranged facing the fan (18) along the main direction.

4. Motor or alternator according to any one of claims 1 to 3, wherein the first flange (20) comprises an inner wall (42) between the fan (18) and the rotor (12), the inner wall (42) having through-holes (56) such that the fan (18) is in fluid communication with the rotor (12), the through-holes (56) representing between 30% and 40% of the surface area of the inner wall (42).

5. Motor or alternator according to any one of claims 1 to 4, wherein the fan (18) has an inner face and an outer face, the fan (18) generating a first flow (72) at the outer face and a second flow (74) at the inner face, the first flow (72) being directed towards the cooling channels of the stator (28), the second flow (74) being directed towards the cooling channels of the rotor (24).

6. Motor or alternator according to any one of claims 1 to 5, comprising an air circulator (70) integral with the shaft (16) and arranged on a second side of the rotor (12) along the main direction, the second side of the rotor (12) being opposite the first side of the rotor (12) along the main direction.

7. Motor or alternator according to any one of claims 1 to 6, wherein the fan (18) comprises ribs (41).

8. A vehicle comprising a traction motor or an alternator, the traction motor or the alternator being a motor (10) or an alternator according to any one of claims 1 to 7.
